(19) **Europäisches Patentamt European Patent Office Office européen des brevets**

(11) **EP 3 630 887 B1**

(12) **EUROPEAN PATENT SPECIFICATION**

(45) Date of publication and mention of the grant of the patent:
**02.08.2023 Bulletin 2023/31**

(21) Application number: **18720627.1**

(22) Date of filing: **03.05.2018**

(51) International Patent Classification (IPC):
**C08L 23/12** (2006.01)    **C08L 23/14** (2006.01)
**C08F 2/00** (2006.01)

(52) Cooperative Patent Classification (CPC):
(C-Sets available)
**C08L 23/12;** C08L 2205/02        (Cont.)

(86) International application number:
**PCT/EP2018/061306**

(87) International publication number:
**WO 2018/219583 (06.12.2018 Gazette 2018/49)**

(54) **HETEROPHASIC PROPYLENE COPOLYMERS**

**HETEROPHASISCHE PROPYLENCOPOLYMERE**

**COPOLYMÈRE HÉTÉROPHASIQUE DE PROPYLÈNE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2017 EP 17173388**

(43) Date of publication of application:
**08.04.2020 Bulletin 2020/15**

(73) Proprietor: **Basell Poliolefine Italia S.r.l.
20127 Milano (IT)**

(72) Inventors:
• **VITALE, Gianni**
  **44122 Ferrara (IT)**
• **PIEMONTESI, Fabrizio**
  **44122 Ferrara (IT)**
• **GADDI, Benedetta**
  **44122 Ferrara (IT)**
• **COLLINA, Gianni**
  **44122 Ferrara (IT)**
• **MORINI, Giampiero**
  **44122 Ferrara (IT)**
• **CATHELIN, Caroline**
  **44122 Ferrara (IT)**
• **CIARAFONI, Marco**
  **44122 Ferrara (IT)**
• **FERRARO, Gianpiero**
  **44122 Ferrara (IT)**
• **CAVALIERI, Claudio**
  **44122 Ferrara (IT)**
• **MASSARI, Paola**
  **44122 Ferrara (IT)**
• **GRAZZI, Michele**
  **44122 Ferrara (IT)**

(74) Representative: **LyondellBasell
c/o Basell Poliolefine Italia
Intellectual Property
P.le Donegani 12
44122 Ferrara (IT)**

(56) References cited:
**WO-A1-2017/076701    CN-A- 105 622 809
US-A1- 2016 333 121**

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/6574;**
**C08L 23/12, C08L 23/14;**
C08F 210/06, C08F 210/16, C08F 2500/12,
C08F 2500/17

**Description**

FIELD OF THE INVENTION

The present disclosure relates to an heterophasic propylene copolymer having a low content of oligomer and specially fit for automotive element especially for automotive interior elements.

BACKGROUND OF THE INVENTION

Polypropylene is the material of choice for many applications. For instance polypropylene compositions are used in articles in the automotive interior. Said compositions are - generally speaking - good processable and can be individually customized. A problem of the propylene composition used in automotive interior can be the malodor and fogging. The presence of these volatile compounds is the responsible of the classic odor of the interior of a new car. WO 2012/049204 relates to an heterophasic propylene copolymers having a low content of oligomer being obtained with a particular catalyst system containing two external electron donors. WO 2017/076701 relates to heterophasic propylene copolymers obtained by using a class of external donor of formula $(R_6)_a(R_7)_bSi(OR_8)_c$ where a and b are integers from 0 to 2, c is an integer from 1 to 4 and the sum (a+b+c) is 4; $R_6$, $R_7$ and $R_8$ are alkyl, cycloalkyl or aryl radicals with 1-18 carbon atoms optionally containing heteroatoms.

SUMMARY OF THE INVENTION

The applicant discovered that the amount of volatile compounds (oligomers) can be further reduced by using a particular catalyst system containing bismuth and at least one external electron donor compound having the general formula:

$$(R1)_aSi(OR^2)_b$$

wherein a is 0 or 1, b is 3 or 4 and $R^1$ and $R^2$ are independently selected among alkyl radicals having 2-6 carbon atoms
An object of the present disclosure is a polypropylene composition comprising:

A) from 50wt% to 90wt%, of a propylene homopolymer having a fraction insoluble in xylene at 25 °C, higher than 90 %, and a MFR L (Melt Flow Rate according to ISO 1133, condition L, i.e. 230°C and 2.16 kg load) from 0.5 to 200 g/10 min;
B) from 10 wt% to 50wt%; of a copolymer of propylene and ethylene having from 30.0 wt% to 70.0wt%, of ethylene derived units;

the sum of the amount of component A) and B) being 100;
the composition having:

i) an intrinsic viscosity of the fraction soluble in xylene at 25 °C comprised between 2.2 and 4.0 dl/g;
ii) a MFR L (Melt Flow Rate according to ISO 1133, condition L, i.e. 230°C and 2.16 kg load) from 0.5 to 100 g/10 min;
iii) a xylene soluble fraction ranging from 10 wt% to 50 wt%;

the polypropylene composition being obtained by a two steps polymerization process wherein:

step a) propylene is polymerized to obtain component A) in the presence of a catalyst comprising the product of the reaction between:

a) a solid catalyst component comprising Ti, Mg, Cl, and an internal electron donor compound characterized by the fact that it contains from 0.1 to 50%wt of Bi with respect to the total weight of said solid catalyst component;
b) an alkylaluminum compound and,
c) an external electron-donor compound having the general formula:

$$(R^1)_aSi(OR^2)_b$$

wherein a is 0 or 1, b is 3 or 4 and $R^1$ and $R^2$ are independently selected among alkyl radicals having 2-6 carbon atoms.

step b) propylene and ethylene are polymerized to obtain component B) in the presence of the polymerization product of step A).

BRIEF DESCRIPTION OF THE DRAWINGS

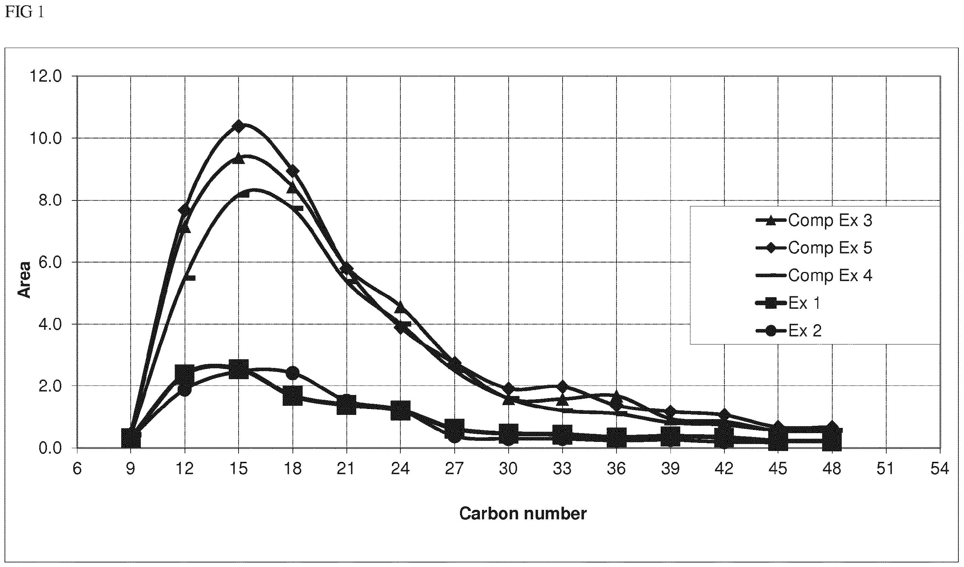

Fig 1 represent the plot of the values of the TDS analysis of examples 1 and 2 and comparative examples 3-5.

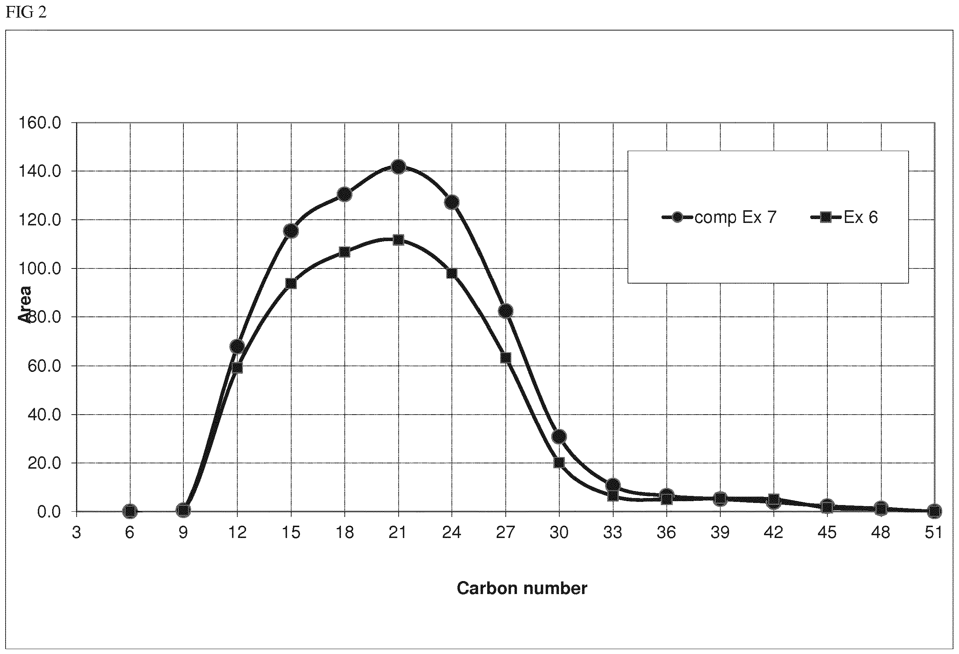

Fig 2 represent the plot of the values of the TDS analysis of example 6 and comparative example 7.

DETAILED DESCRIPTION OF THE INVENTION

An object of the present disclosure is a polypropylene composition comprising:

A) from 50wt% to 90wt%; preferably from 60wt% to 85wt%; more preferably from 67 wt% to 82wt%, of a propylene homopolymer having a fraction insoluble in xylene at 25 °C, higher than 90 %, preferably higher than 95% more preferably higher than 97 %; and a MFR L (Melt Flow Rate according to ISO 1133, condition L, i.e. 230°C and 2.16 kg load) from 0.5 to 200 g/10 min preferably from 50 to 150 g/10 min, more preferably from 80 to 140 g/10 min;
B) from 10 wt% to 50wt%; preferably from 15 wt% to 40 wt%; more preferably from 18 wt% to 33 wt%, %; of a copolymer of propylene and ethylene having from 30.0 wt% to 70.0wt%, preferably from 35.0wt% to 60.0wt%, more preferably from 40.0wt% to 58.0wt%, even more preferably from 45wt% to 55% of ethylene derived units;

the sum of the amount of component A) and B) being 100;
the composition having:

i) an intrinsic viscosity of the fraction soluble in xylene at 25 °C comprised between 2.2 and 4.0 dl/g; preferably between 2.5 and 4.0 dl/g more preferably between 2.6 and 3.5 dl/g;
ii) a MFR L (Melt Flow Rate according to ISO 1133, condition L, i.e. 230°C and 2.16 kg load) from 0.5 to 100 g/10 min preferably from 8 to 70 g/10 min more preferably from 10 to 60 g/10 min;
iii) a xylene soluble fraction ranging from 10 wt% to 50 wt%; preferably from 12 wt% to 35 wt%;

the polypropylene composition being obtained by a two steps polymerization process wherein:

step a) propylene is polymerized to obtain component A) in the presence of a catalyst comprising the product of the reaction between:

a) a solid catalyst component comprising Ti, Mg, Cl, and an internal electron donor compound characterized by the fact that it contains from 0.1 to 50%wt of Bi with respect to the total weight of said solid catalyst component;
b) an alkylaluminum compound and,
c) an external electron-donor compound having the general formula:

$$(R^1)_a Si(OR^2)_b$$

wherein a is 0 or 1, b is 3 or 4 and $R^1$ and $R^2$ are independently selected among alkyl radicals having 2-6 carbon atoms;

step b) propylene and ethylene are polymerized to obtain component B) in the presence of the polymerization product of step A).

From the above definitions it is evident that the term "copolymer" is referred to polymers containing only two kinds of comonomers.
The polypropylene composition according to the present disclosure is preferably used for automotive interior element.
For automotive interior element it is meant all the interior parts of automotive in particular door handles, door pockets, trim and parcel shelves, air ducts, heater/air conditioning unit casings, armatures for fascia panels, centre consoles, carpeting.

The oligomer content of the polypropylene composition to be used for interior automotive element of the present disclosure is very low, in particular the oligomer content measured in the ex-reactor polymer are lower than 2000 ppm; preferably lower than 1500 ppm.

Furthermore the polypropylene composition for the automotive interior element of the present disclosure is endowed with improved values of Izod at 23°C, 0°C and -20°C and maintaining a good value of tensile modulus.

Preferably the tensile modulus is comprised between800 MPa and 1600 MPa, preferably comprised between 850 and 1500 MPa;

The very low value of oligomers together with the mechanical properties render the composition of the present disclosure fit to be used in automotive interiors, so that to reduce the odours and the emission of volatile compounds.

Thus a further object of the present disclosure is an automotive interior comprising the polypropylene composition of the present disclosure.

The polyolefin composition herein disclosed is prepared by a process comprising homopolymerizing propylene in a first stage and then propylene with ethylene in a second both stages being conducted in the presence of a catalyst comprising the product of the reaction between:

a) a solid catalyst component comprising Ti, Mg, Cl, and at least one electron donor compound characterized by the fact that it contains from 0.1 to 50%wt of Bi with respect to the total weight of said solid catalyst component;
b) an alkylaluminum compound and,
c) an external electron-donor compound having the general formula:

$$(R^1)_aSi(OR^2)_b$$

wherein a is 0 or 1, b is 3 or 4 and $R^1$ and $R^2$ are independently selected among alkyl radicals having 2-6 carbon atoms.

Preferably, in the catalyst component the content of Bi ranges from 0.5 to 40% more preferably from 1 to 35, especially from 2 to 25%wt and in a very particular embodiment from 2 to 20%wt.

The particles of solid component have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

In general the amount of Mg preferably ranges from 8 to 30% more preferably from 10 to 25%wt.

Generally, the amount of Ti ranges from 0.5 to 5% and more preferably from 0.7 to 3%wt.

Preferred internal electron donor compounds are selected from alkyl and aryl esters of optionally substituted aromatic polycarboxylic acids such as esters of benzoic and phthalic acids, Specific examples of such esters are n-butylphthalate, diisobutylphthalate, di-n-octylphthalate, ethyl-benzoate and p-ethoxy ethyl-benzoate.

The Mg/Ti molar ratio is preferably equal to, or higher than, 13, preferably in the range 14-40, and more preferably from 15 to 40. Correspondingly, the Mg/donor molar ratio is preferably higher than 16 more preferably higher than 17 and usually ranging from 18 to 50.

The Bi atoms preferably derive from one or more Bi compounds not having Bi-carbon bonds. In particular the Bi compounds can be selected from Bi halides, Bi carbonate, Bi acetate, Bi nitrate, Bi oxide, Bi sulphate, Bi sulfide. Compounds in which Bi has the valence 3$^+$ are preferred. Among Bi halides, preferred are Bi trichloride and Bi tribromide. The most preferred Bi compound is BiCl$_3$.

The preparation of the solid catalyst component can be carried out according to several methods.

According to one method the solid catalyst component can be prepared by reacting a titanium compound of formula Ti(OR)$_{q-y}$X$_y$, where q is the valence of titanium and y is a number between 1 and q, preferably TiCl$_4$, with a magnesium chloride deriving from an adduct of formula MgCl$_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl$_4$ (generally 0°C); the mixture is heated up to 80-130°C and kept at this temperature for 0.5-2 hours. The treatment with TiCl$_4$ can be carried out one or more times. The electron donor compound can be added in the desired ratios during the treatment with TiCl$_4$.

Several ways are available to add one or more Bi compounds in the catalyst preparation. According to the preferred option, the Bi compound(s) is/are incorporated directly into the $MgCl_2 \cdot pROH$ adduct during its preparation. In particular, the Bi compound can be added at the initial stage of adduct preparation by mixing it together with MgCh and the alcohol. Alternatively, it can be added to the molten adduct before the emulsification step. The amount of Bi introduced ranges from 0.1 to 1 mole per mole of Mg in the adduct. Preferred Bi compound(s) to be incorporated directly into the $MgCl_2 \cdot pROH$ adduct are Bi halides and in particular is $BiCl_3$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $AlzEtsCls$, possibly in mixture with the above cited trialkylaluminums. The Al/Ti ratio is higher than 1 and is generally comprised between 50 and 2000.

The external electron donor compound (c) is a silicon compound having the general formula

$$(R^1)_a Si(OR^2)_b \qquad (II)$$

wherein a is 0 or 1, b is 3 or 4 and $R^1$ and $R^2$ are independently selected among alkyl radicals having 2-6 carbon atoms.

A first group of preferred silicon compounds of formula (II) are those for which a is 1, b is 3 and $R^1$ and $R^2$ are independently selected among alkyl radicals having 2-6, preferably 2-4, carbon atoms, isobutyl triethoxysilane (iBTES) being particularly preferred.

A further group of preferred silicon compounds of formula (II) are those for which a is 0, b is 4 and $R^2$ are independently selected among alkyl radicals with 2-6, preferably 2-4, carbon atoms, tetraethoxysilane being particularly preferred.

The external electron donor compound (c) is used in such an amount to give a molar ratio between the organoaluminum compound and said external electron donor compound (iii) of from 0.1 to 200, preferably from 1 to 100 and more preferably from 3 to 50.

The polymerization processes are already known in the art such as in gas-phase operating in one or more fluidized or mechanically agitated bed reactors, slurry polymerization using as diluent an inert hydrocarbon solvent, or bulk polymerization using the liquid monomer (for example propylene) as a reaction medium. The polypropylene composition of the present disclosure can be also obtained with a polymerization process in two or more stages in which component A) is obtained in the first stages and then component B) is obtained in the second stages in the presence of component A). each stage can be in gas-phase, operating in one or more fluidized or mechanically agitated bed reactors, slurry phase using as diluent an inert hydrocarbon solvent, or bulk polymerization using the liquid monomer (for example propylene) as a reaction medium.

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.

The compositions to be used in the present disclosure can also contain additives commonly employed in the art, such as antioxidants, light stabilizers, heat stabilizers, nucleating agents, colorants and fillers.

The automotive interior element according to the present disclosure can be obtained starting from the polypropylene composition described above by means of the techniques commonly known in the art, such as injection molding, thermoforming and so on.

The following examples are given to illustrate and not to limit the present disclosure.

EXAMPLES

### Determination of Mg, Ti

The determination of Mg and Ti content in the solid catalyst component has been carried out via inductively coupled plasma emission spectroscopy on "I.C.P Spectrometer ARL Accuris".

The sample was prepared by analytically weighting, in a "Fluxy" platinum crucible", $0.1 \div 0.3$ grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then

### Determination of Bi

The determination of Bi content in the solid catalyst component has been carried out via inductively coupled plasma emission spectroscopy on "I.C.P Spectrometer ARL Accuris".

The sample was prepared by analytically weighting in a 200 cm$^3$ volumetric flask 0.1÷0.3 grams of catalyst. After slow addition of both ca. 10 milliliters of 65% v/v HNO$_3$ solution and ca. 50 cm$^3$ of distilled water, the sample undergoes a digestion for 4÷6 hours. Then the volumetric flask is diluted to the mark with deionized water. The resulting solution is directly analyzed via ICP at the following wavelength: Bismuth, 223.06 nm.

### Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

### Determination of X.I. and X.S,

2.5 g of polymer and 250 cm$^3$ of o-xylene are introduced in a glass flask equipped with a refrigerator and a magnetical stirrer. The temperature is raised in 30 minutes from room temperature up to the boiling point of the solvent (135°C). The so obtained clear solution is then kept under reflux and stirring for further 30 minutes. The closed flask is then kept in a thermostatic water bath at 25 °C for 30 minutes as well so that the crystallization of the insoluble (XI) part of the sample takes place. The so formed solid is filtered on quick filtering paper. 100 cm$^3$ of the filtered liquid is poured in a previously weighed aluminum container which is heated on a heating plate under nitrogen flow, to remove the solvent by evaporation. The container is then kept in an oven at 80 °C under vacuum to dryness and then weighed after constant weight is obtained. Thus one calculates the percent by weight of polymer soluble and insoluble in xylene at 25 °C.

### Intrinsic Viscosity (I.V.)

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

### Melt flow rate (MIL)

The melt flow rate MIL of the polymer was determined according to ISO 1133 (230°C, 2.16 Kg).

### $^{13}$C NMR of propylene/ethylene copolymers

$^{13}$C NMR spectra were acquired on a Bruker AV-600 spectrometer equipped with cryoprobe, operating at 160.91 MHz in the Fourier transform mode at 120°C.

The peak of the Spp carbon (nomenclature according to "Monomer Sequence Distribution in Ethylene-Propylene Rubber Measured by 13C NMR. 3. Use of Reaction Probability Mode " C. J. Camian, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

E% mol = 100 * [PEP+PEE+EEE] The weight percentage of ethylene content was evaluated using the following equation:

$$E\%\ wt. = \frac{E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Camian (C.J. Carman, R.A. Harrington and C.E. Wilkes, Macromolecules, 1977; 10, 536) as:

$$r_1r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of Propylene sequences was calculated as mm content from the ratio of the PPP $mnT_{\beta\beta}$ (28.90-29.65 ppm) and the whole $T_{\beta\beta}$ (29.80-28.37 ppm).

The ethylene content of component B) has been calculated from the total ethylene content by using the formula: Ethylene(B wt%)=Ethylene(tot wt%)/(amount B wt%)/100).

**Tensile Modulus**

Tensile Modulus is measured according to ISO 527-2, and ISO 1873-2

**Oligomer content**

The determination of oligomer content by solvent extraction consists of treating 5g of polypropylene sample with 10 ml of methylendichloride ($CH_2Cl_2$) in an ultrasonic bath at 25°C for 4 hours. 1 μl of the extracted solution is injected into capillary column and analysed by using FID, without any filtration. For quantitative estimation of oligomer content a calibration based on external standard method has been applied. In particular a series of hydrocarbon (C12-C22-C28-C40) have been used.

**TDS analysis**

An amount of polymer between 0.10 and 0.15 g is loaded in an open glass tube (177 mm length, 6 mm external diameter, 4 mm internal diameter) which is then inserted into a TDS3 thermodesorber (Gerstel, Mülheim an der Ruhr, Germany) mounted on an Agilent GC-6890N (Agilent Technologies, Billerica, MA, USA) chromatograph equipped with a MS-5973N mass spectrometry detector (electron multiplier of 1500, MS range from 29 to 800). The instruments carries a PTV injector and a HP-5msUI Part N°19091S-436UI (Agilent Technologies) chromatographic column (60 m length, 0.25 mm internal diameter, 0.10 micron film thickness) in the oven.

The temperature of the thermodesorber is raised from 40 to 280°C at a rate of 60 C°/min and is then kept at 280°C for 15 min while the injector is refrigerated at -50°C by liquid nitrogen to extract oligomers, additives and their by-products. The process occurs in ultrapure helium to provide an oxygen-free atmosphere. The desorbed substances are then injected into the column. The temperature of the oven varies from 40°C (5 min isothermal step) to 320°C with a rate of 6C°/min during the elution, which takes 101.67 min. The carrier gas is ultrapure helium, at a constant flow rate of 0.7 mL/min. The chromatogram is acquired in full scan mode, total ion current (TIC). Elaboration is performed though Agilent ChemStations software.

**Examples 1 and 2**

**Procedure for the preparation of the spherical adduct**

Microspheroidal MgCl2·pC$_2$H$_5$OH adduct was prepared according to the method described in Comparative Example 5 of WO98/44009, with the difference that BiCl$_3$ in a powder form and in the amount of 3 mol% with respect to the magnesium has been added before feeding of the oil.

**Procedure for the preparation of the solid catalyst component**

Into a 500 ml round bottom flask, equipped with mechanical stirrer, cooler and thermometer 300 ml of TiCl$_4$ were introduced at room temperature under nitrogen atmosphere. After cooling to 0°C, while stirring, diisobutylphthalate and 9.0 g of the spherical adduct (prepared as described above) were sequentially added into the flask. The amount of charged internal donor was such to meet a Mg/donor molar ratio of 8. The temperature was raised to 100°C and maintained for 2 hours. Thereafter, stirring was stopped, the solid product was allowed to settle and the supernatant liquid was siphoned off at 100°C. After the supernatant was removed, additional fresh TiCl$_4$ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times in temperature gradient down to 60°C and one time at room temperature. The obtained solid was then dried under vacuum and analyzed.

**Prepolymerization treatment**

Before introducing it into the polymerization reactors, the solid catalyst component described above have been contacted with triethyl aluminum (TEAL) and isobutyl-trietoxysilane (iBTES) or tetraethoxysilane (TEOS) as reported in table 1.

Polymerization

The polymerization run is carried out in continuous mode in a series of two reactors equipped with devices to transfer the product from one reactor to the one immediately next to it. The first reactor is a liquid phase loop reactor, and the second is a fluidized bed gas-phase reactor. A propylene homopolymer is prepared in the liquid loop reactor while an propylene ethylene copolymer is prepared in the gas-phase reactor in the presence of the propylene homopolymer coming from the first stage. Hydrogen is used as molecular weight regulator.

The gas phase (propylene, ethylene and hydrogen) is continuously analyzed via gas-chromatography.

At the end of the run the powder is discharged and dried under a nitrogen flow.

The main polymerization conditions and the analytical data relating to the polymers produced in the reactors are reported in Table 1. Properties of the polymer are reported on table 2.

**Comparative examples 3-5**

Preparation of the solid catalyst component

The catalysts of comparative examples 3-5 were produced by using the same method used of the catalyst of example 1 but using methylcyclohexyldimethoxysilane (C donor) or dicyclopentyldimethoxysilane (D donor) as reported in table 1.

**Prepolymerization treatment**

Prepolymerisation treatment has been carried out according to the procedure of example 1

Polymerization

The polymerization was carried out by using the same procedure of example 1. The main polymerization conditions and the analytical data relating to the polymers produced in the reactors are reported in Table 1. Properties of the polymer are reported on table 2.

Table 1

| PROCESS CONDITIONS | Ex1 | Ex2 | comp Ex3 | comp Ex4 | comp Ex5 |
|---|---|---|---|---|---|
| **Precontact** | | | | | |
| Temperature, °C | 12 | 12 | 12 | 12 | 12 |
| Residence time, min | 17 | 14 | 20 | 14 | 20 |
| external donor, type | **iBTES** | **TEOS** | C | C | **D** |
| Teal/donor weight ratio, g/g | 10 | 10 | 6 | 5 | 24 |
| **Prepolymerization** | | | | | |
| Temperature, °C | 20 | 20 | 20 | 20 | 20 |
| Residence time, min | 7 | 7 | 7 | 7 | 7 |
| **Loop 1st reactor in liquid phase** - propylene homopolymer | | | | | |
| Temperature, °C | 70 | 70 | 70 | 70 | 70 |
| Pressure, barg | 40 | 40 | 40 | 40 | 40 |
| Residence time, min | 58 | 65 | 61 | 63 | 61 |
| [H2] feed conc, ppm | 1408 | 722 | 3230 | 3312 | 6272 |
| Split, wt% | 75 | 75 | 75 | 74 | 73 |
| **Gas-Phase reactor** - ethylene/propylene copolymerization | | | | | |
| Temperature, °C | 80 | 80 | 80 | 80 | 80 |
| Pressure, barg | 13 | 13 | 16 | 16 | 13 |
| Residence time, min | 20 | 8 | 39 | 44 | 26 |
| H2/C2, mol/mol | 0.068 | 0.055 | 0.063 | 0.065 | 0.1 |
| C2/C2+C3, mol/ mol | 0.41 | 0.41 | 0.38 | 0.44 | 0.5 |
| Split wt% | 25 | 25 | 25 | 26 | 27 |
| | | | | | |
| **C2-=ethylene; C3-=propylene; H2=hydrogen** | | | | | |

Table 2

| Example | | Ex1 | Ex2 | com p Ex3 | com p Ex4 | comp Ex5 |
|---|---|---|---|---|---|---|
| **Component A)** | | | | | | |
| Homopolymer content | % | 74 | 75 | 73 | 73 | 73 |
| MFR "L" | g/10 , | 50 | 45 | 68 | 60 | 63 |
| Xvlene soluble fraction | wt% | 1.8 | 2.6 | 2.5 | 1.2 | 1.4 |
| **Component B)** | | | | | | |
| Copolymer content* | wt% | 26 | 25 | 27 | 27 | 27 |
| **Property of the composition** | | | | | | |
| Ethylene content | wt% | 13.8 | 13.4 | 15.0 | 13.7 | 14.1 |
| Intrinsic viscosity of the Xvlene soluble fraction | dl/g | 2.73 | 2.87 | 2.76 | 2.98 | 2.60 |
| | | | | | | |
| Xylene -soluble fraction | wt% | 22.3 | 22.6 | 22.9 | 23.4 | 22.9 |

(continued)

| Property of the composition | | | | | | |
|---|---|---|---|---|---|---|
| MFR | g/10' | 19.1 | 17.9 | 15.5 | 16.7 | 18.6 |
| tensile Modulus | MPa | 930 | 970 | 900 | 930 | 1030 |
| Oligomer content | ppm | 1240 | 695 | 1875 | 1700 | 2690 |
| *calculated | | | | | | |

From table 2 results that the oligomer content of the propylene composition obtained according to the present disclosure are considerably lower than that one of comparative examples obtained by using a different external donor.

### Example 6

#### Procedure for the preparation of the spherical adduct

Microspheroidal $MgCl_2 \cdot pC_2H_5OH$ adduct was prepared according to the method described in Comparative Example 5 of WO98/44009, with the difference that $BiCl_3$ in a powder form and in the amount of 3 mol% with respect to the magnesium has been added before feeding of the oil.

#### Procedure for the preparation of the solid catalyst component

Into a 500 ml round bottom flask, equipped with mechanical stirrer, cooler and thermometer 300 ml of $TiCl_4$ were introduced at room temperature under nitrogen atmosphere. After cooling to 0°C, 9.0 g of the spherical adduct (prepared as described above) were added while stirring, then diethyl 3,3-dipropylglutarate was sequentially added into the flask. The amount of charged internal donor was such to meet a Mg/donor molar ratio of 13. The temperature was raised to 100°C and maintained for 2 hours. Thereafter, stirring was stopped, the solid product was allowed to settle and the supernatant liquid was siphoned off at 100°C.

After siphoning, fresh $TiCl_4$ and an amount of 9,9-bis(methoxymethyl)fluorene such to have a Mg/diether molar ratio of 13 was added. The mixture was then heated at 120°C and kept at this temperature for 1 hour under stirring. Stirring was stopped again, the solid was allowed to settle and the supernatant liquid was siphoned off. The solid was washed with anhydrous hexane six times in temperature gradient down to 60°C and one time at room temperature. The obtained solid was then dried under vacuum and analyzed.

#### Prepolymerization treatment

Before introducing it into the polymerization reactors, the solid catalyst component described above have been contacted with triethyl aluminum (TEAL) and isobutyl-trietoxysilane (iBTES) in table 3.

#### Polymerization

The polymerization run is carried out as for example 1. Properties of the polymer are reported on table 4.

### Comparative example 7

#### Preparation of the solid catalyst component

The catalysts of comparative example 7 were produced by using the same method used of the catalyst of example 6.

#### Prepolymerization treatment

Before introducing it into the polymerization reactors, the solid catalyst component described above have been contacted with triethyl aluminum (TEAL) as reported in table 3.

Polymerization

The polymerization was carried out by using the same procedure of example 5. The main polymerization conditions and the analytical data relating to the polymers produced in the reactors are reported in Table 3. Properties of the polymer are reported on table 4.

Table 3

| PROCESS CONDITIONS | Ex 5 | Comp ex 6 |
|---|---|---|
| **Precontact** | | |
| Temperature, °C | 12 | 12 |
| Residence time, min | 16 | 18 |
| External donor, type | **iBTES** | **C** |
| Teal/donor, g/g | 4 | 5 |
| **Prepolymerization** | | |
| Temperature, °C | 20 | 20 |
| Residence time, min | 6 | 6 |
| **Loop 1st reactor in liquid phase**-propylene homopolymer | | |
| Temperature, °C | 70 | 70 |
| Pressure, barg | 40 | 40 |
| Residence time, min | 74 | 68 |
| [H2] feed conc, ppm | 3689 | 5890 |
| **Gas-Phase reactor** - ethylene/propylene copolymerization | | |
| Temperature, °C | 80 | 80 |
| Pressure, barg | 15 | 14 |
| Residence time, min | 14 | 19 |
| H2/C2, mol/mol | 0.06 | 0.08 |
| C2/C2+C3, mol/ mol | 0.39 | 0.47 |

Table 4

| | | Ex 5 | Comp ex 6 |
|---|---|---|---|
| External Donor | Type | IBTES | C |
| **Component A)** | | | |
| Homopolymer content | % | 86 | 85 |
| MFR | g/10' | 130 | 140 |
| XS | % | 1.7 | 1.4 |
| **Component B)** | | | |
| Copolymer content* | % | 14 | 15 |
| **Property of the composition** | | | |
| Ethylene content | wt% | 6.7 | 7.0 |
| Xvlene -soluble fraction | % | 12,8 | 14,1 |
| Intrinsic viscosity of the Xylene soluble fraction | dl/g | 2,74 | 2,37 |

(continued)

| Property of the composition | | | |
|---|---|---|---|
| MFR | g/10' | 64,0 | 67,8 |
| Tensile Modulus | MPa | 1410 | 1480 |
| Oligomers | ppm | 1470 | 1660 |

## Claims

1. Polypropylene composition comprising:

   A) from 50 wt% to 90 wt%; of a propylene homopolymer having a fraction insoluble in xylene at 25 °C, higher than 90 %; and a MFR L (Melt Flow Rate according to ISO 1133, condition L, i.e. 230°C and 2.16 kg load) from 0.5 to 200 g/10 min;
   B) from 10 wt% to 50wt%; %; of a copolymer of propylene and ethylene having from 30.0 wt% to 70.0wt%, of ethylene derived units;
   the sum of the amount of component A) and B) being 100;
   the composition having:

   i) an intrinsic viscosity of the fraction soluble in xylene at 25 °C comprised between 2.2 and 4.0 dl/g;
   ii) a MFR L (Melt Flow Rate according to ISO 1133, condition L, i.e. 230°C and 2.16 kg load) from 0.5 to 100 g/10 min;
   iii) a xylene soluble fraction ranging from 10 wt% to 50 wt%;

   the polypropylene composition being obtained by a two steps polymerization process wherein:

   step a) propylene is polymerized to obtain component A) in the presence of a catalyst comprising the product of the reaction between:

   a) a solid catalyst component comprising Ti, Mg, Cl, and an internal electron donor compound **characterized by** the fact that it contains from 0.1 to 50%wt of Bi with respect to the total weight of said solid catalyst component;
   b) an alkylaluminum compound and,
   c) an external electron-donor compound selected from: isobutyl triethoxysilane and tetraethoxysilane;

   step b) propylene and ethylene are polymerized to obtain component B) in the presence of the polymerization product of step A).

2. The polypropylene composition according to claim 1 wherein component A) ranges from 60wt% to 85wt%; and component B) ranges from 15 wt% to 40 wt%.

3. The polypropylene composition according to claims 1 or 2 wherein component B) contains from 35.0wt% to 60.0wt% of ethylene derived units.

4. The polypropylene composition according to anyone of claims 1-3 wherein the a MFR L of the composition (Melt Flow Rate according to ISO 1133, condition L, i.e. 230°C and 2.16 kg load) ranges from 8 to 70 g/10 min:

5. The polypropylene composition according to anyone of claims 1-4 wherein the xylene soluble fraction ranges from 25 wt% to 35 wt%.

6. An automotive interior element comprising the polypropylene composition of claims 1-5.

**EP 3 630 887 B1**

**Patentansprüche**

1. Polypropylenzusammensetzung, umfassend:

   A) 50 Gew.% bis 90 Gew.% eines Propylenhomopolymers mit einer in Xylol bei 25 °C unlöslichen Fraktion von mehr als 90 %; und einer MFR L (Schmelzflussrate gemäß ISO 1133, Bedingung L, d. h. 230 °C und 2,16 kg Last) von 0,5 bis 200 g/10 min;
   B) 10 Gew.% bis 50 Gew.% eines Copolymers von Propylen und Ethylen mit 30,0 Gew.% bis 70,0 Gew.% von Ethylen abgeleiteten Einheiten;
   wobei die Summe der Mengen der Komponenten A) und B) 100 beträgt;
   wobei die Zusammensetzung aufweist:

   i) eine Grenzviskosität der in Xylol bei 25 °C löslichen Fraktion zwischen 2,2 und 4,0 dl/g;
   ii) eine MFR L (Schmelzflussrate gemäß ISO 1133, Bedingung L, d. h. 230 °C und 2,16 kg Last) von 0,5 bis 100 g/10 min;
   iii) eine in Xylol lösliche Fraktion im Bereich von 10 Gew.% bis 50 Gew.%;

   wobei die Polypropylenzusammensetzung nach einem Polymerisationsprozess mit zwei Schritten erhalten wird, wobei:

   in Schritt a) Propylen zum Erhalten von Komponente A) in Gegenwart eines Katalysators polymerisiert wird, der das Produkt der Reaktion zwischen:

   a) einer festen Katalysatorkomponente, umfassend Ti, Mg, Cl, und eine interne Elektronendonorkomponente, **gekennzeichnet durch** die Tatsache, dass sie 0,1 bis 50 Gew.% Bi in Bezug auf das Gesamtgewicht der festen Katalysatorkomponente enthält;
   b) einer Alkylaluminiumverbindung und
   c) einer externen Elektronendonorkomponente ausgewählt aus Isobutyltriethoxysilan und Tetraethoxysilan umfasst;

   in Schritt b) Propylen und Ethylen zum Erhalten von Komponente B) in Gegenwart des Polymerisationsprodukts aus Schritt A) polymerisiert werden.

2. Polypropylenzusammensetzung nach Anspruch 1, wobei Komponente A) im Bereich von 60 Gew.% bis 85 Gew.% liegt und Komponente B) im Bereich von 15 Gew.% bis 40 Gew.% liegt.

3. Polypropylenzusammensetzung nach Anspruch 1 oder 2, wobei Komponente B) 35,0 Gew.% bis 60,0 Gew.% von Ethylen abgeleitete Einheiten enthält.

4. Polypropylenzusammensetzung nach einem der Ansprüche 1 bis 3, wobei die MFR L der Zusammensetzung (Schmelzflussrate gemäß ISO 1133, Bedingung L, d. h. 230 °C und 2,16 kg Last) im Bereich von 8 bis 70 g/10 min liegt.

5. Propylenpolymerzusammensetzung nach einem der Ansprüche 1 bis 4, wobei die in Xylol lösliche Fraktion im Bereich von 25 Gew.% bis 35 Gew.% liegt.

6. Automobilinnenelement, umfassend die Polypropylenzusammensetzung der Ansprüche 1 bis 5.

**Revendications**

1. Composition de polypropylène comprenant :

   A) 50 % en poids à 90 % en poids d'un homopolymère de propylène présentant une fraction insoluble dans le xylène à 25 °C supérieure à 90 % ; et un MFR L (indice de fluidité à chaud selon la norme ISO 1133, condition L, c'est-à-dire à 230 °C et sous une charge de 2,16 kg) de 0,5 à 200 g/10 min ;
   B) 10 % en poids à 50 % en poids d'un copolymère de propylène et d'éthylène comprenant 30,0% en poids à 70 % en poids de motifs dérivés de l'éthylène ;
   la somme de la quantité des constituants A) et B) valant 100 ;

la composition présentant :

i) une viscosité intrinsèque de la fraction soluble dans le xylène à 25 °C comprise entre 2,2 et 4,0 dl/g ;
ii) un MFR L (indice de fluidité à chaud selon la norme ISO 1133, condition L, c'est-à-dire à 230 °C et sous une charge de 2,16 kg) de 0,5 à 100 g/10 min ;
iii) une fraction soluble dans le xylène située dans la plage de 10 % en poids à 50 % en poids ;

la composition de polypropylène étant obtenue par un procédé de polymérisation en deux étapes, où :

étape a) du propylène est polymérisé pour obtenir le constituant A) en présence d'un catalyseur comprenant le produit de la réaction entre :

a) un constituant catalytique solide comprenant Ti, Mg, Cl et un composé donneur d'électrons interne **caractérisé par le fait qu'**il contient 0,1 à 50 % en poids de Bi par rapport au poids total dudit constituant catalytique solide ;
b) un composé d'alkylaluminium et
c) un composé donneur d'électrons externe choisi parmi : l'isobutyltriéthoxysilane et le tétraéthoxysilane ;

étape b) du propylène et de l'éthylène sont polymérisés pour obtenir le constituant B) en présence du produit de polymérisation de l'étape A).

2. Composition de polypropylène selon la revendication 1, le constituant A) représentant 60 % en poids à 85 % en poids ; et le constituant B) représentant 15 % en poids à 40 % en poids.

3. Composition de polypropylène selon les revendications 1 ou 2, le constituant B) contenant 35 % en poids à 60 % en poids de motifs dérivés de l'éthylène.

4. Composition de polypropylène selon l'une quelconque des revendications 1 à 3, le MFR L de la composition (indice de fluidité à chaud selon la norme ISO 1133, condition L, c'est-à-dire à 230 °C et sous une charge de 2,16 kg) étant situé dans la plage de 8 à 70 g/10 min.

5. Composition de polypropylène selon l'une quelconque des revendications 1 à 4, la fraction soluble dans le xylène étant située dans la plage de 25 % en poids à 35 % en poids.

6. Élément intérieur d'automobile comprenant la composition de polypropylène selon les revendications 1 à 5.

FIG 1

EP 3 630 887 B1

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012049204 A
- WO 2017076701 A
- US 4399054 A
- US 4469648 A
- WO 9844009 A

### Non-patent literature cited in the description

- **HUGGINS, M.L.** *J. Am. Chem. Soc.,* 1942, vol. 64, 2716
- **C. J. CAMIAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride- diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536